# EUROPEAN PATENT SPECIFICATION

(11) **EP 1 304 616 B1**
(45) Date of publication and mention of the grant of the patent: **17.03.2010**
(21) Application number: 01124297.1
(22) Date of filing: 18.10.2001
(51) Int. Cl.: G06F 9/50

(54) **Method for processing a data file using a plug-in**
Verfahren zur Dateiverarbeitung mit einem Plug-in
Procédé pour traiter un fichier de données avec un plug-in

(43) Date of publication of application: 23.04.2003
(73) Proprietor: SUN MICROSYSTEMS, INC., Santa Clara, California 95054 (US)
(72) Inventor: Laux, Thorsten O., 20099 Hamburg (DE); Halama, Ingrid, 22307 Hamburg (DE); Voitenko, Mikhail, 22307 Hamburg (DE)
(74) Representative: Harris, Ian Richard

(56) References cited:
- EP-A- 1 091 295
- WO-A-01/22264
- US-A- 5 838 906
- US-A- 6 067 559
- ANONYMOUS: "MIME types and manifest files" MOZILLA.ORG PLUGLET DEVELOPERS GUIDE, [Online] 20 February 2001 (2001-02-20), pages 1-2, XP002201284 Retrieved from the Internet: <URL:www.mozilla.org/projects/blackwood/ja va-plugins/ guide/mime_manifest.html> [retrieved on 2002-06-05]

## Description

### FIELD OF THE INVENTION

The present application relates to a method and processing unit for processing a data file, e.g. in a distributed environment.

### BACKGROUND OF THE INVENTION

Data processing devices are used for the widest range of increasingly versatile applications, providing services ranging from, for example, editing of text documents or spread sheet applications to complex software systems, e. g. for computer aided design or manufacturing, purchasing, computer aided banking applications and similar. Further, increasingly complex applications are employed in the field of personal services, for example for personal data organization, mobile communication applications, such as mobile telephones or hand-held computing devices, and communication services and other services, provided over a computer network.

In the above-outlined examples, particularly in a distributed environment involving a processing of information at different physical locations, a number of different applications or modules of one application may interact and cooperate to provide a particular service. Further, different applications or modules of an application may be executed and interact on a single data processing device to provide a particular service.

In these cases it is important that compatibility between different applications or modules of applications is always provided. Further, it is necessary to provide different applications or modules of an application cooperating with one another with information on respective other applications or modules, in order to allow a correct addressing of calls or requests, i.e. to assure that the modules or applications always communicate with the correct counterpart.

As an example a text processing application can be considered. If a user selects a text document and issues an instruction to open the same, the text processing application retrieves and displays the document. Generally, the user may then edit this document using, e.g. input commands, input through a keyboard, while reviewing changes to the text document on a display.

For such a text processing operation a number of different modules may cooperate to provide the editing service, including modules for displaying information, processing input information, modifying the data file and similar. In this case, if the text processing application is for example updated or if parts of the text processing application are exchanged or modified, it is necessary to maintain a compatibility of the individual elements of the text processing application.

When exchanging or updating parts of an application, it is generally possible to ensure downward compatibility, i.e. to ensure that a newly introduced part of the application is still able to communicate and cooperate with all other applications or parts of the applications. If for example, in the above text processing application a display module for displaying information is exchanged in an update operation or if it is modified, it is necessary that all other parts of the text processing application interacting with the display module can still communicate and cooperate with new display module. Thus, the new display module must be downward compatible.

While this may already pose a problem in a comparatively small application, such as the above-outlined text processing application executed on a single data processing device, this becomes a potentially severe problem in a complex environment, for example a large service application executed on one or a plurality of data processing devices. Still further, it is very difficult in distributed environments to ensure compatibility between all versions of all modules at all times. Full compatibility between all elements of an application may require substantial programming efforts and may thus be very cost intensive.

US 5 838 906 describes a distributed hypermedia method for automatically invoking an external application providing interaction and display of embedded objects within a hypermedia document. A program object is embedded into a hypermedia document similar to a data object. The user can select the program object from the display screen and the program object is executed on a user computer or on a remote server or an additional remote.computer.

US 6 067 559 describes a server architecture for segregating dynamic content generation applications into separate process spaces. A server program is provided to receive client requests and multiple applications are provided to process the requests. Each application comprises a collection of agents for invocation and processing of the requests. An application manager manages the collection of agents. Depending on a request, the application manager selects one or more agents to generate content to be returned to a client. An application manager director manages the application managers and facilitates delivery of client requests from a server program to a suitable application.

### SUMMARY OF THE INVENTION

It is therefore desirable to allow to process a data file while facilitating compatibility and cooperation between different modules of an application. Further, it is desirable to provide a user with improved means for specifying preferences regarding a cooperation between the different modules of an application.

According to an example of the application a method for processing a data file includes receiving a service request to process the data file, the data file having one of a plurality of data file types; activating a managing module in association with a data file type; and selecting one of a plurality of implementation modules based on configuration data available to the managing module, the configuration data specifying an implementation module for processing the data file. Introducing a managing module associated with the data file type for a further selection or routing of the service request allows to maintain compatibility and cooperation between different modules, e.g. of an application. Further, providing configuration data specifying an implementation module for the actual processing of the data file, allows improved user options for customizing-interactions between modules forming an application.

The managing module may provide an instruction for the implementation module to process the data file. This allows that a request routed to the managing module does not need to be specifically adapted, as the service request can interact with the managing module without being aware of an implementation module.

The managing module may further effect a routing of a data file to the selected implementation module. Thus, instead of routing a data file to the managing module for further processing, the data file may be directly forwarded to the selected implementation module avoiding a further routing operation by the managing module upon receiving the data file.

Still further, the managing module may be located at a client unit and may issue a server request to a server unit, instructing the server unit to effect use of the implementation module. Thus, the managing module may directly instruct a server unit to use the specifically selected implementation module for processing purposes.

The server request may be in a HTML format and may include an embedded element specifying a special MIME-type. Thus, the managing module and implementation modules may be implemented in a known network environment, such as the Internet.

The managing module may further write a request file including information identifying the implementation module and may generate an instruction to read the request file for effecting use of the implementation module. Accordingly, a direct communication between the managing module and an entity responsible for using the implementation module is not required.

The managing module may constitute a managing plug-in which is registered to a data file type and which is selected from a plurality of managing plug-ins based on data file type. Accordingly, the managing module may be a plug-in as for example used by a browser in a network environment, allowing the use of standard functionality for implementing a managing module and implementation modules.

Similarly, the implementation module may be constituted by an implementation plug-in which is registered to a data file sub-type and wherein the configuration data link the data file type and the data file sub-type. Accordingly, the configuration data may link a managing plug-in and an implementation plug-in based on a data file type of the managing plug-in and the data file sub-type of the implementation plug-in.

The data file type may be a MIME type and the data file sub-type may be a special MIME type.

The configuration data may specify an implementation module based on at least one of - a computing environment, - a source of the service request; and - a user preference. Accordingly, the managing plug-in may effect use of an implementation plug-in based on different conditions improving options for adaptation.

Still further, the configuration data may be generated during runtime. Thus, cooperation preferences between modules of an application may be specified during service provision, e.g. by a user.

A client unit may include a plurality of client operating applications, each of the client operating applications cooperating with a server operating application located at a server unit; and different implementation modules may be associated with different pairs of cooperating client and server operating applications. Accordingly, a client unit may provide different implementation plug-ins for cooperating with different server operating applications.

The processing of the data file may include at least one of: - editing a data file; - processing information included in the data file; - transferring the data file; and - generating screen elements on a display.

A program may be provided having instruction to carry out the above method operations. Still further, a computer-readable medium may be provided, in which a program is embedded, where the program is to make a computer execute the above method operations. A computer program product may comprise a computer-readable medium.

According to another example, a processing unit for processing a data file may include: a control unit for receiving a service request to process the data file, the data file having one of a plurality of data file types; a managing module registered to the data file type; wherein the control unit is adapted to activate the managing module upon receiving the service request; and wherein the managing module is adapted to select one of a plurality of implementation modules based on configuration data available to the managing module, the configuration data specifying an implementation module for processing the data file.

Further advantageous features of the application are outlined in further dependent claims.

### BRIEF DESCRIPTION OF THE DRAWINGS

- Fig. 1: shows a block diagram of basic elements for processing a data file with a managing module and an implementation module according to embodiment of the invention;
- Fig. 2: shows a method for processing a data file according to another embodiment of the invention, particularly outlining operations for selecting an implementation module;
- Fig. 3: shows operations for processing a data file according to another embodiment of the invention, particularly outlining options for selecting an implementation module;
- Fig. 4: shows elements of a system for processing a data file according to another embodiment of the invention, particularly outlining a client and server environment;
- Fig. 5: shows operations for processing a data file according to another embodiment of the invention, particularly showing operations and a client unit and a server unit;
- Fig. 6: shows elements of a system for processing a data file according to another embodiment of the invention, particularly outlining a client and server environment; and
- Fig. 7: shows elements of a system for processing a data file according to another embodiment of the invention, particularly outlining a network arrangement.

### DETAILED DESCRIPTION OF PREFERRED EMBODIMENTS

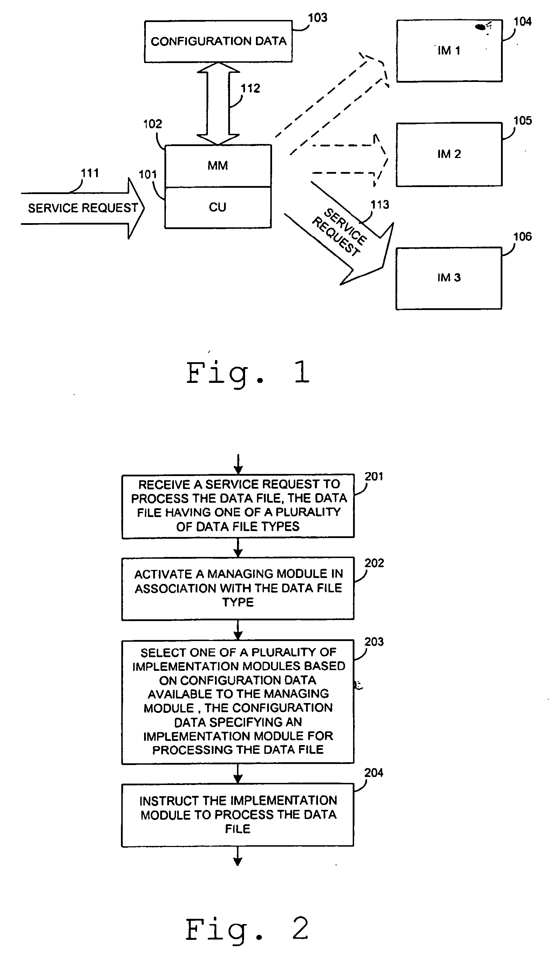

In the following an embodiment of the invention will be outlined with respect to Fig. 1.

Fig. 1 shows basic elements for processing a data file using a managing module and an implementation module according to an embodiment of the invention.

Fig. 1 shows a control unit 101 for receiving a service request, as indicated by arrow 111, to process a data file, the data file having one of a plurality of data file types. Further, the control unit is adapted to activate a managing module 102 upon receiving the service request.

Moreover, Fig. 1 shows configuration data 103, which are available to the managing module 102, as indicated by an arrow 112. Fig. 1 also illustrates a plurality of implementation modules, in the present case three implementation modules 104, 105 and 106.

The managing module 102 is adapted to select one of the implementation modules 104, 105 and 106 for processing the data file, the selection being based on the configuration data 103. In the present case it is assumed that the implementation module 106 is selected by the managing module 102, as illustrated by an arrow 113.

The managing module 102 may be arranged to directly instruct the implementation module to process the data file or alternatively, the managing module may indirectly instruct the implementation module to process the data file, e. g. via further elements of the embodiment of Fig. 1, not shown. The implementation module 106 selected for processing the data file may retrieve the data file itself or, alternatively, the managing module may instruct an application cooperating with the implementation module 106 to transmit the data file or parts thereof to the implementation module.

The managing module may also write a request file including information identifying the implementation module and may generate an instruction to read the request file for effecting use of the implementation module 106. In this case the managing module 102 could write a corresponding instruction file at a specified location and, e. g. an application program cooperating with the implementation module could be instructed to read the data file and accordingly proceed to use the implementation module for processing the data file, e.g. display a document or similar. Alternatively, the implementation module itself could be adapted to read the request file in order to retrieve and process the data file.

The managing module may further select an implementation module also based on a computing environment, a source of the service request, a user preference, and/or similar.

As an example, in the following it is assumed that a text processing application is used for editing a text document or similar. In this case an implementation module could be constituted by a module for displaying the text document on a screen associated with a data processing device controlled by a user. The text processing application could be arranged to communicate and cooperate with the display module, either locally within the data processing device control by the user or through a communication network or communication link, if the text processing application is distributed over a plurality of data processing devices.

Usually, a text document has a particular extension or other identification marking it as a text document and, upon receiving a service instruction from the user to edit the text document, the data file type could be analyzed and based on the analyzing result one of a plurality of managing modules could be selected. For example, the data file type, the data file "text document", could be used for selecting one of a plurality of managing modules, each associated with a different data file type. The service request could then be forwarded to the managing module 1 or 2 associated with the data file type.

The managing module may then perform a look-up operation in the configuration data 103, in order to determine an implementation module for executing the service request.

An implementation module may be selected based on the data file type of the managing module, a computing environment, such as an operating system or version thereof, or an instance of a version. Further, the selection of an implementation module may depend on a source of the service request, e. g. another application issue in the service request, a user ID or similar. Moreover, the implementation module may be selected based on a user preference. A user preference could be determined either during one time, e.g. a user could be prompted to input a selection preference, or user preference could be provided offline, e. g. upon system setup, during installation, or at any other point in time.

Accordingly, the configuration data may associate a particular implementation module with a computing environment, a request source or a user preference, or combinations thereof. The managing module may then effect a processing of the data file by the selected implementation module.

While for illustration purposes, in the present example the data file is assumed to be constituted by a text document, it is also possible that the data file has any other format or type, includes instructions for triggering execution of a certain functionality, may include parameters to be processed or similar.

The above example allows to select one of a plurality of implementation modules for processing a data file and thus supports efforts to ensure compatibility between different applications or modules of applications, particularly in distributed environments. For example, if not always one and the same processing module should be activated in connection with a service request including a data file with a specific data file type, but a processing with a selected one of a plurality of different implementation modules is desired, the above-outlined concept of managing module and implementation modules can be advantageously used.

In the following further examples of the elements shown in Fig. 1 will be outlined in further details. It is noted that the following description relates to examples only and should not be construed as limiting the application.

The elements shown in Fig. 1 may form part of a data processing unit for processing a data file as outline above. This processing unit may be constituted by any kind of data processing device, such as a general purpose data processing device, a plurality of interconnected data processing device, a mobile computing device, a personal data organizer, a mobile communication device including mobile telephones and similar. The data processing device may be connected to other data processing devices (not shown) by any kind of communication link, including communication networks, dedicated communication lines, wireless transmission links and similar.

While the data processing unit may include the elements shown in Fig. 1, it is also possible that at least some of the elements of Fig. 1 are arranged at an external location, communicating with the data processing device to any kind of communication link.

The control unit, shown at reference numeral 101, may be arranged for receiving a service request to process a data file having one of a plurality of data file types. Further, it may be realized as an integral part of the data processing unit. For example, the control unit 101 could be realized in association with a central processing unit and by corresponding software operations, or could be realized as a hardware device, located inside or outside of the data processing unit. Further, the control unit 101 could be realized partially in hardware and partially in software.

Still further, the control unit 101 is arranged for receiving a service request, as indicated by the arrow 111. The service request may include an instruction to process a data file, using any processing operation, e.g. editing the data file, processing information included in the data file, transferring the data file, generating screen elements on a display or similar. Thus, a data file may include any kind of information such as text information, image information, data of scientific applications, instructions for effecting certain functionality, parameters to be processed and similar.

The service request could be issued by any application providing a certain service or functionality, located either within the data processing unit, or could be located externally, in which case the service request could be received over a communication link, such as outlined above.

Further, the service request may be issued by a user operating the data processing device or inputting the service request at a remote location and effecting a transmission of the service request to the control unit 101.

As an example, a user could enter a service request instruction through a keyboard connected to the control unit, for example by specifying a data file and a type of service requested, or could input a corresponding command by dragging an icon representing a data file into a designated instruction field, leading to a generation of a corresponding service request.

The service request may specify a data file with a data file name and may specify a data file type for further specifying the format of the data file. For example, a data file type could be specified by a file extension or other indicator and could show that the data file has a particular format, content, or any other characteristics.

Still further, the service request could specify a specific service or functionality requested, e.g. a particular processing to be performed with the data file. Such an indication of a requested service or functionality to be performed on the data file could be derived from a file extension, or could be explicitly included in the service request.

A data file type can specify any kind of format of the data file, including known document formats, may specify specific contents of the data file or functionality to be executed with the data file, including functionality for visualization purposes in distributed environments.

The control unit 101 may be arranged to appropriately partition the service request in order to identify, e.g. the name of the data file and the data file type. Further, the control unit is preferably configured to activate the managing module 102 registered to the date file type of the data file, specified in the service request.

If only a single managing module is available, no selection process is required. However, if a plurality of managing modules is available, for example, each registered to a specific data file type, the control unit preferably performs a selection operation to select an appropriate one of the managing modules, e.g., the managing module registered to the data file type. This selection operation may involve a look-up operation in a look-up table specifying all available data file types and identifies of managing modules registered to the respective data file types. The look-up table could be stored locally at the control unit or data processing unit, or could be accessed as a remote location, e.g. at an external data storage unit.

Activating the managing module 102 may then involve issuing a call or activation request to the managing module.

In the following, examples of the managing module 102 will be outlined in further detail.

The managing module 102, similar to the control unit, may be realized at an integral part of the data processing unit or may be realized by an external location, connected to the control unit through a communication link. For example, the managing module 102 could be realized by a central processing unit of the data processing unit and by corresponding software operations, or could be realized as a hardware device. Further, the managing module 102 may be partially realized in hardware and partially realized in software.

The managing module is arranged to select one of the plurality of implementation modules 104, 105 and 106 based on the configuration data 103 available to the managing module 102, as illustrated by the arrow 112.

In this respect, the managing module may be considered to assume a forwarding functionality. The managing module 102 does not perform the requested operations on the data file itself, but selects an implementation module for executing the requested functionality. By providing this forwarding capability it becomes possible to provide for different processing options of data files having one specified data file type. In arrangements without the forwarding functionality of the managing module, a selection of different implementation modules for different processing operations may not be possible. Instead, based on the data file type indicated in the service request, always the same module for performing the requested processing operations would be selected, in the absence of further selection information.

This may particularly be the case in distributed environments, such as the Internet, connecting a large number of data processing devices. If in this case service requests specify a particular data file type, a processing module will exclusively be selected based on the data file type, leading to a selection of always one and the same processing module in connection with a particular data file type.

To address this problem, the managing module 102 is provided, capable of accessing configuration data 103 and accordingly selecting an implementation module, thus introducing the desired options for processing the data file.

The configuration data 103 preferably specify the implementation modules available in association with a particular data file type. Thus, the configuration data could constitute a look-up table associating each of a plurality of data file types with respective implementation modules.

Further, the configuration data preferably include further information enabling the managing module 102 to select one of the implementation modules associated with a particular data file type. This information could include, as briefly outlined above, a computing environment, such as an operating system or application program. A specific implementation module could be selected based on a specific version of an operating system or application program, e.g. a specific release version, or on an instance or sub-version of a particular release version. Thus, the managing module can select a appropriate implementation module which is compatible with the version of the operating system or application program, in order to ensure compatibility without requiring a downward compatibility of a processing module, as required in the prior art.

Further, the configuration data may associate different implementation modules with different sources of the service request. Accordingly, the configuration data would allow the managing module 102 to select one of the available implementation modules based on an origin of the service request, e.g. if it was generated by a user, by another application program, in a specific computing environment and similar. It is also possible that the configuration data associate different implementation modules with different instances of time. For example, if the implementation modules provide visualization functionality, one implementation module could be designated for visualizing a data file during night time with low surrounding illumination, whereas another implementation module could be designated and developed for displaying a data file during a day time in a bright environment.

Still further, the configuration data could specify a specific implementation module based on a user preference. A user preference could be specified either during one time by prompting the user to input a selection information for selecting a specific implementation module. For example, the managing module 102 could open a corresponding frame on a display, presenting a plurality of available implementation modules and requesting a selection of one of the modules. Alternatively, the user preference could be specified at any other point in time, e.g. on system setup, upon starting a work session, or at any point in time selected by the user.

The configuration data 103 may be stored in an internal memory of the data processing device, such as a hard drive, a random access memory or similar. Further, the configuration data could be stored at an external location, for example a data storage unit accessible by the managing module or data processing device. Such a data storage unit could be accessible through a communication network, as outlined above.

The managing module 102 could dispatch a look-up request initiating a look-up operation in a configuration data table, the look-up request including a data file type and optionally any other information for facilitating a selection of one of a plurality of available implementation modules. The look-up request then preferably includes information on a computing environment, a source of the service request, a user preference or any other information allowing a selection of implementation module.

In response to the look-up operation an identifier of the selected implementation module could be returned to the managing module 102. If a plurality of implementation modules would be retrieved in connection with the look-up request, e.g. if a plurality of implementation modules is suitable for the requested processing operations, further selection criteria could be applied, such as a location of the implementation module, processing requirements and similar.

In the following examples of the implementation modules will be outlined in further detail.

Fig. 1 shows three implementation modules 104, 105 and 106 as an example, it is noted that an arbitrary number of implementation modules may be provided.

The implementation modules 104, 105 and 106 may each be realized as integral part of the data processing unit or may be arranged at an external location. For example, the implementation modules may each be realized by a central processing unit of the data processing unit and by corresponding software instructions, or could be realized as a hardware device, located inside or outside in the data processing unit. Further, the implementation modules may each be partially realized in hardware and partially realized in software.

The implementation modules preferably perform defined operations on the data file, as outlined above, e. g., for displaying a document, processing information contained in a data file, processing parameters of a data file, or carrying out further instructions in connection with the data file.

In general an implementation module will process or handle the data file specified in the service request in a defined way. While the handling of the processing or handling of the data file by different implementation modules may be fundamentally different, it is also possible that different implementation modules carry out substantially the same functionality in certain variations. For example, it is possible that a group of implementation modules constitute individual modifications of a basic module for processing the data file, such as different release versions of the processing module, or versions or instances of a processing module associated-with different versions or instances of operating applications involved in serving the service request.

On the other hand, the implementation modules could stand for entirely different functionality to be performed in connection with a service request including a specific data file type. For example, if the processing of a data file including scientific data of a particular data file type, a first implementation module could perform a first processing operation on the data and a second implementation module could perform a second processing operation on the data. Examples could be different transformations of data such as the fast Fourier transform, the Laplace transform and similar.

An implementation module itself may not necessarily be a single unit, but may be realized in different sub-modules, which may even be arranged in a distributed environment. Thus, an implementation module may only handle or supervise the processing of the data file by placing calls further sub-modules.

As outlined above, the managing module 102 selects one of the available implementation modules, i.e. one of the implementation associated with the data file type based on further information. Thus, the selected implementation module, in Fig. 1 implementation module 106, receives appropriate selection information, notifying the implementation module 106 that it has been selected for processing the data file.

The selection information could either be transmitted directly from the managing module to the implementation module 106, as indicated by the arrow 113, or could be transmitted indirectly from the managing module to the implementation module 106, e.g. via further elements such as an application program providing the data file or being involved in processing or handling the data file.

The selection information may include information on the data file for processing and may optionally include further processing instructions.

Further, it is possible that the managing module effects a routing of the data file to the selected implementation module, in the present case implementation module 106. Thus, the implementation module could be started through an indirect operation, i.e. by routing the data file towards the implementation module 106.

Still further, the managing module may issue a request to a further element or application program involved in handling the data file, instructing this application program to effect a use of the selected implementation module. In this case the managing module would issue the request including an identifier of the selected implementation module to the further application program and the application program would then issue a request towards the selected implementation module, requesting a processing of the data file.

Moreover, the managing module may write a request file including information identifying the selected implementation module at a specified location and may generate an instruction to read the request file for effecting use of the implementation module. In this case a processing application involved in handling the data file could be instructed to read the request file, or the implementation module itself could be instructed to read the request file. The request file could further include information on the data file and similar.

Moreover, it is possible that the implementation module is indirectly instructed to process the data file and proceed to retrieve the data file from a remote location.

The processing result generated by the implementation module may be delivered back to an application program involved in handling the data file, may result in a display operation of the data file or a processing result or may result in further calls on further application programs or modules initiated by the selected implementation module.

In order to facilitate an activation of the selected implementation module, each implementation module could be registered to a data file sub-type. A data file sub-type could define a sub-format of the format of the data file, e.g. a format according to a particular release version or modification of the data file format, or similar. The data file sub-type may be used to uniquely identify one of the implementation modules. Further, the data file sub-type may be used upon invoking or activating the implementation module, particularly in case the implementation module is activated by a further application program involved in handling the data file. In this case the application program involved in handling the data file could issue a request including the data file sub-type and optionally the data file or parts thereof, leading to a selection of the implementation module associated with the data file sub-type.

It is noted that the above described elements and/or operations for handling a data file, including receiving a service request, activating a managing module and selecting an implementation module for processing a data file may at least partially be realized as software or hardware. I.e., controls can be carried out using dedicated hardware, or a correspondingly programmed data processing device or a group of data processing devices.

Further, it is noted that a computer-readable medium may be provided having a program embodied thereon, where the program is to make a computer or a system of data processing devices to execute functions or operations of the features and the elements of the above described examples. A computer-readable medium can be a magnetic or optical or other tangible medium on which a program is recorded, but can also be a signal, e. g. analog or digital, electric, magnetic or optical, in which the program is embodied for transmission. Further, a computer program product may be provided comprising the computer-readable medium.

In the following a further embodiment of the invention will be described with respect to Fig. 2.

Fig. 2 shows operations for processing a data file according to another embodiment of the invention, particularly outlining operations for selecting an implementation module.

The operations outlined in Fig. 2 may be executed using the data processing unit shown in Fig. 1, however, Fig. 2 is not limited thereto.

The embodiment described with respect to Fig. 2 allows to conveniently maintain compatibility between different elements of a processing environment and further allows to improve user options in choosing operations to be carried out with a data file having a specific data file type.

In a first operation 201 a service request to process a data file is received, e.g. at a data processing unit, such as the data processing unit described with respect to Fig. 1. The service request may be received from another application program or may be issued by a user operating a data processing device, as outlined above. The service request preferably includes-information on the data file and the data file type of the data file.

A plurality of data file types may be provided, specifying any kind of format of information included in the data file, including text, images, instructions with regard to further operations, and similar. As outlined above, the data file type may be a data file type as known in the art, for example specified by a file extension and similar. Further, the data file type may be specifically designated for a particular data file format, e.g. by a manufacturer or vendor of a specific software system.

In an operation 202 a managing module associated with the data file type is activated. If a plurality of managing modules is available, a selection operation may be performed for selecting the managing module associated with the data file type. This selection operation may be a look-up operation in a registry, where managing modules are registered to data file types.

During the activation procedure, the managing module may be provided with information contained in the service request, such as an identifier of the data file, and further information, such as information on a computing environment, a source of the service request, a user preference and similar, as outlined before.

In an operation 203 the managing module may select one of a plurality of implementation modules based on configuration data available to the managing module, the configuration data specifying an implementation module for processing the data file.

The configuration data may include a look-up table associating implementation modules with data file types e.g. based on further information regarding a computing environment, a source of the service request, a user preference and similar, as outlined before.

Accordingly, even though the issued service request may only include information on the data file and a data file type, provision of the managing module and configuration data allows a selection of an implementation module for performing processing operations on the data file. Thus, the actual processing of the data file may by adapted to various factors, such as a computing environment, e.g. different release versions or modifications of application programs or operating programs involved in handling the data file, may be adapted to a source of the service request, or may be adapted to a user preference.

In an operation 204 the selected implementation module is instructed to process the data file. This instruction to process the data file may reach the implementation module either directly, e.g. via the managing module, or indirectly, such as via a processing application involved in handling the data file or any other entity.

The example described with respect to Fig. 2 illustrates how compatibility between different elements of a processing environment may be maintained and how user options for specifying processing options may be enhanced.

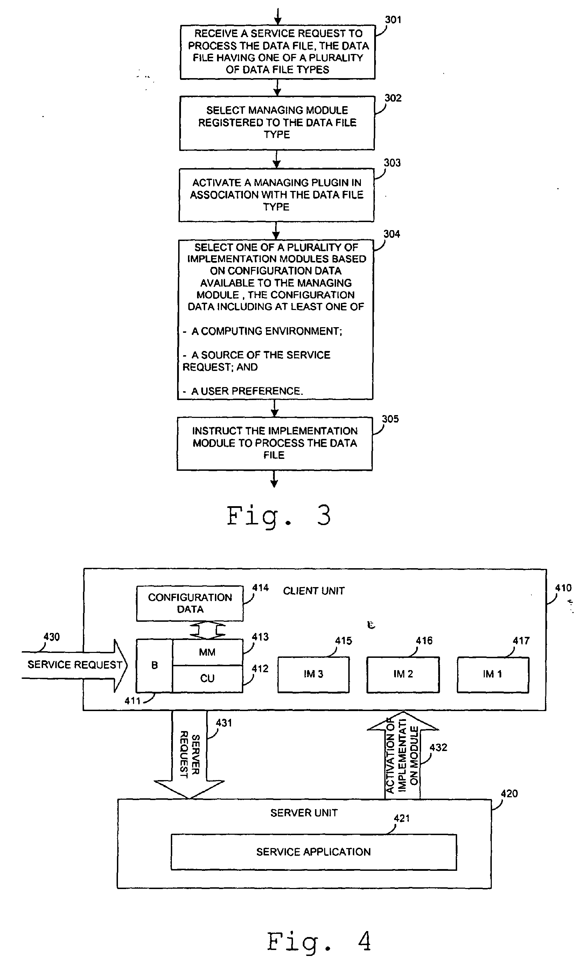

In the following a further embodiment of the invention will be described with respect to Fig. 3.

Fig. 3 outlines operations for handling a data file, particularly outlining operations in connection with selecting an implementation module based on configuration data.

The operations of Fig. 3 may be carried out using the device shown in Fig. 1, however, Fig. 3 is not limited thereto.

In an operation 301 a service requested to process a data file is received, the data file having one of a plurality of data file types. This operation may be similar to operation 201 outlined with respect to Fig. 2.

In an operation 302 a managing module registered to the data file type of the data file is selected. The selection may be performed by a look-up operation in a registry of an operating system or application program. Managing modules may be registered to data file types, for example on installation of a managing module, or an operating software, or may be registered based on user interaction at arbitrary points in time.

In an operation 303 the managing module associated with the data file type is activated, e.g. by placing a call to the module including an identifier of the data file and furthers information, as outlined above.

The managing module, in an operation 304 selects one of a plurality of implementation modules based on configuration data available to the managing module, the configuration data including information on a computing environment, and/or a source of the service request and/or a user preference. Thus, an implementation module may be selected based on a computing environment, e.g. a specific release version of a computing environment, such as a version of an operating program, or an instance of a version of an operating program. An instance of a version of an operating program can specify a further sub-version of the version of the operating program. Accordingly, an implementation module compatible with a particular computing environment or version or instance of a version may be selected for processing the data file.

Further, the source of the service request may be considered and thus, an implementation module may be selected based on an application program issuing the request, as outlined before. Finally, the selection of an implementation module may be based on a user preference, allowing to customize processing options for data files. User preferences may be input during runtime or may be specified offline, as outlined before.

In an operation 305 the selected implementation module is instructed to process the data file. Processing the data file may include any kind of operations, including display operations, rendering operations, processing of parameters included in the data file, and similar.

In the following a further embodiment of the invention will be outlined with respect to Fig. 4.

Fig. 4 shows elements of a system for processing a data file, particularly showing a client unit cooperating with a server unit.

Fig. 4 particularly outlines, how the concept of managing module and implementation module can be applied to a distributed environment including a client unit and a server unit.

Fig. 4 shows a client unit 410, such as data processing device operated by a user. Further, the system of Fig. 4 includes a server unit 420. The client, e.g. located remote from the server may used to access the server unit for placing service requests, e.g. to obtain processing capabilities and/or data storage capabilities.

The client unit 410 includes a browser application 411 or any other kind of application program for connecting and communicating with the server unit 420. A browser application, as known in the art, can be any program or group of application programs allowing a convenient browsing through to information or data available in distributed environments such as on the Internet or any other network including local area networks. A browser application generally allows to view, download data and allows to transmit data between data processing devices.

Further, the client unit 410 includes a control unit 412, a managing module 413, configuration data 414, and a plurality of implementation modules 415, 416 and 417. Even though in the present example three implementation modules are shown, it is noted that an arbitrary number of implementation modules can be provided.

The server unit 420 includes a service application 421, such as an application program for performing a certain type of functionality, for example text processing services, spreadsheet services, video or image display services, or any other kind of processing.

In the present example the browser application 411 is assumed to receive a service request, as indicated by an arrow 430. The service request, as outlined with respect to previous embodiments, preferably specifies a data file and a data file type. Further, the browser application 411 is assumed to include or cooperate with the control unit 412 and the managing module 413. Thus, the browser application may assume functionality of the control unit and the managing module as outlined with respect to the previous embodiments. The managing module 413, as illustrated before, selects one of the implementation modules based on the configuration data 414.

Further, the managing module 413 generates a server request, as indicated by arrow 431, for instructing the server unit 420 to effect use of the selected implementation module. The server unit then activates the selected implementation module, in the present case implementation module 416 for processing the data file. The activation of the implementation module may be effected by the service application 421 or may be effected through an operating system at the server unit.

Alternatively, the managing module 413 may write a request file including information identifying the selected implementation module and may generate and transmit an instruction to the server unit, instructing the server unit/service application 421 to read the request file and activate the implementation module.

As before, the configuration data may specify an implementation module based on a computing environment, such as a version of the operating application of the server unit 420, a source of the service request and a user preference, as outlined before.

Accordingly, the configuration data may specify a particular implementation module based on characteristics of the server unit 420, or of the service application program 421 or of an operating system located at the server unit 420. Thus, during a communication session between the client unit and the server unit it is possible to select an implementation module which is compatible with the particular configuration or composition of the server unit 420.

Accordingly, while the server unit 420 may be enabled to always cooperate with the implementation module 416, another server unit having another specific configuration may cooperate with the implementation module 415 or 417, etc.

Further, it is also possible that server units having a configuration within a group of configurations, such as a group of release versions, or a group of instances of release versions of a server operating system always cooperate with a specific implementation.

In the following a further example will be described.

In this practical example, in a distributed environment such as the internet, a data file type may be a MIME type and the data file sub-type may be a special MIME type.

A MIME (Multi Purpose Internet Mail Extensions) specifies a commonly known method for transmitting data files via computer networks, such as the Internet, e.g. using e-mail services. MIME leads to an encoding of the data file using one of available encoding methods at the sending side and leads to a decoding of the data file in its original format at the receiving end. A MIME header may be added to the data file including the MIME type, i.e. the data file type, contained, and the encoding method used.

Accordingly, while existing MIME type functionality available in computer networks may be used, the special functionality of the implementation modules may be employed using special defined MIME types corresponding to the data file sub-types.

Standard functionality of, e.g. a browser or any other application for handling data over a network of data processing devices does only provide the option to associate one application or plug-in with a data file extension or data file type. Thus, data files having the same data file type will always be handled at a client unit through the same application or plug-in. If a user wants to use another plug-in, he has to unload the implemented plug-in and install the desired plug-in. This cumbersome process is, of course, unacceptable.

Thus, while the prior art thus does not allow the definition of special MIME-types corresponding to data file sub-types as outlined above, the concept of the present embodiment using the managing module for forwarding a service request based on the MIME-type and further information towards an implementation module associated with a special MIME-type, i.e. a data file sub-type, allows to implement such a functionality.

According to the present embodiment, the special MIME-types could be used for selecting implementation modules associated with a specific release version or instance of a release version of an application or computing environment and may thus facilitate compatibility and interaction between the individual components of a system for handling data files.

According to another example the managing module may be a piece of software sometimes commonly termed plug-in. A browser application, appropriately configured or equipped with appropriate plug-ins may be enhanced with further functionality to access or process specific kinds of information available in a distributed system such as text documents, video information, audio information and any other kind of information in specialized formats. A plug-in may be a piece of software to be used in connection with a larger application program for providing a specific additional service, such as special text editing, special spreadsheet applications and similar. Further, a plug-in may enhance a functionality of a browser application for browsing through information available on a network of computing devices. Accordingly, a plug-in may generally be a piece of software which may be added to any kind of larger software application, such as a browser application, the above exemplary text processing application or any other service application. A plug-in adds a defined functionality to the larger software application, for example visualization capabilities for certain types of documents, specific processing capabilities or similar. Further, a plug-in may be added to the larger software application generally at any desired time, provided that the larger software application is equipped to receive and integrate the plug-in. The code for the plug-in may be obtained for any source, such as over a computer network, from a data storage medium or similar. Alternatively, a plug-in may also be a piece of hardware adding functionality to an application or larger hardware structure.

Examples of plug-ins may include
- applications for displaying text information, such as Acrobat reader for displaying files in the PDF-format,
- applications for displaying images in the GIF-format, TIFF-format, JPEG-format or similar,
- MPEG(Moving Pictures Expert Group)-player for playback of videos in the MPEG-format,
- wave-audio player for playback of digital sound filed, like in the WAV-format, MP3-format or similar,
- applications enabling user interaction for drawing operations, editing operations and similar,
- JAVA applets,
- software applications for remote visualization, such as the Remote Visualization Process protocol (RVP). RVP is a high level definition of a graphic device defined as a set of interfaces. RVP is based completely on a component infrastructure. This gives RVP the ability to map functionality which a client system is unable to support, to a service component on the server side emulating this functionality, or
- runtime environment component services to ensure convenient access from a first computer system to resources available at a second computer system. An example of a runtime environment component service is disclosed in the European patent application EP01100136.9, entitled "Runtime Environment Component Services" and filed January 15, 2001, which is incorporated herein by reference.

Further, a browser application, such as the browser application 411, can be any program or group of application programs allowing a convenient browsing through information or data available in distributed environments such as computer networks. A browser application generally allows to review, download data and allows to transmit data between data processing devices. Further, a browser application, appropriately configured or equipped with appropriate amendments or application modules, such as the above-outlined plug-ins, may be enhanced with further functionality to access or process specific kinds of information available in a distributed system such as text documents, video information, audio information and any other kind of Information in specialized formats, as outlined above.

In the present example it is further assumed that the managing module is constituted by a managing plug-in which is registered to a specific data file type and which may be selected from a plurality of managing plug-ins based on the data file type.

Still further, in the present example it is assumed that the implementation modules are constituted by implementation plug-ins, which are registered to a data file sub-type, and it is assumed that the configuration data link the data file type and the data file sub-type based on e.g. the computing environment, the source of the service request and a user preference or similar.

The data file type may be a MIME type and the data file sub-type may be a special MIME type, as outlined before.

Further, the server request may be in a HTML format and may include an embedded element specifying the special MIME-type. Thus, the managing module and implementation modules may be implemented in a known network environment, such as the Internet.

Accordingly, while a service request may only generally specify a data file and a data file type, the actual processing of the data file may be performed by an appropriately selected implementation module, being compatible with the service application 421 executed at the server unit or an operating system at the server unit.

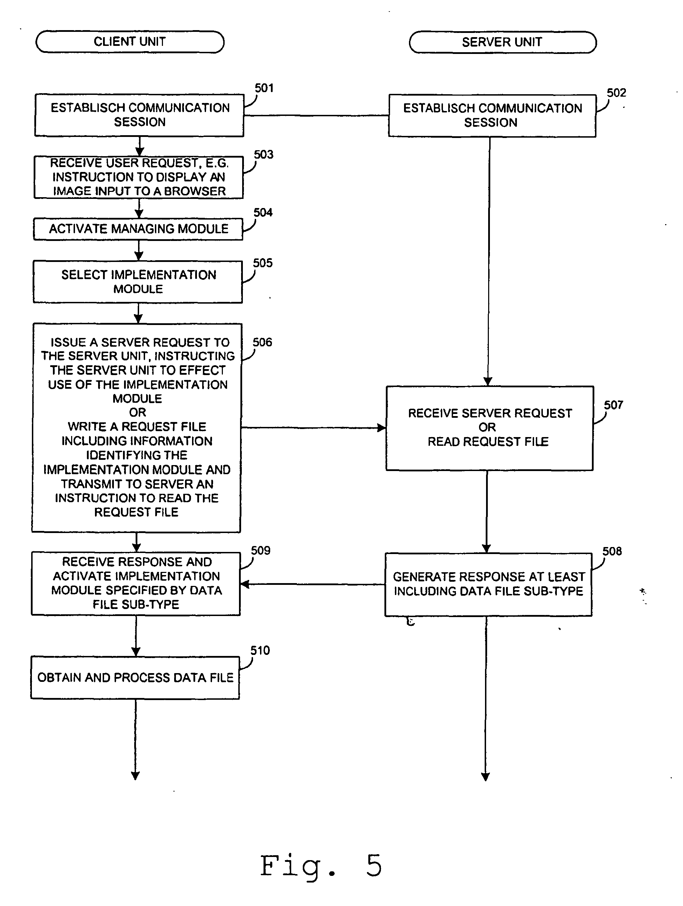

In the following a further embodiment of the invention will be described with respect to Fig. 5.

Fig. 5 shows operations for processing a data file according to another embodiment of the invention, particularly outlining operations in a client and server environment.

The operations shown in Fig. 5 are preferably executed using the client unit and server unit shown in Fig. 4, however, Fig. 5 is not limited thereto.

In the present embodiment it will be assumed that a data file including an image is to be displayed at the client unit. However, it is noted that this example is only selected for illustration purposes and should not be construed to limit the application. Any other operation or processing may be involved.

In a first operation 501 at the client unit, and an operation 502 at the server unit a communication session is established between the client unit and the server unit. This may involve issuing a connection request from the client unit to setup a communication link between the client unit and the server unit, as known in the art. The communication between the client unit and the server unit may involve any kind of communication link, such as a network of data processing devices, e.g. the Internet or any other kind of network, including local area networks. Further, the communication link may involve a dedicated communication line or wireless transmissions.

During establishing the communication session, the client unit and server unit preferably exchange information on a version of an operating system, versions of service applications and similar information on software calls involved in the work session.

Following thereto, an operation 503 at the client unit a user request is assumed to be received, in the present case an instruction to display an image input to a browser application, such as browser application 411 of Fig. 4. In response to receiving the user request, the browser application determines a data file type of the data file constituting the image.

Then, in an operation 504 a managing module is activated based on the data file type determined operation 503. As outlined before, this will preferably a managing module registered beforehand to the data file type.

In an operation 505 the managing module then selects the appropriate implementation module based on configuration data. In the present example, this selection of the appropriate implementation module could be based on a specific version of an operating system at the server unit or an instance of a version of an operating system at the server unit. Further, the selection of an implementation module could be based on a version or instance of a version of an application program involved in displaying the image or performing further operations in association with handling the image data file.

Accordingly, the implementation module may be selected which is compatible with the software code executed at the server unit.

Alternatively, a user may interact in the selection process, either during run-time, e.g. by being prompted to make a selection of an implementation module, or selection information entered by the user beforehand could be used.

In an operation 506 the client unit then issues a server request to the server unit, instructing the server unit to effect a use of the selected implementation module. Alternatively, the client unit could write a request file including information identifying the selected implementation module and could transmit to the server unit an instruction to read the request file, as outlined before.

In an operation 507 at the server unit, the server request will be received or the request file is read, as instructed by the client unit.

In an operation 508 the server unit will then generate a response at least including a data file sub-type associated with the selected implementation module. As in the present embodiment, each implementation module may be registered to a data file sub-type, the server unit could issue a response including the data file sub-type, thus effecting activation of the selected implementation module at the client unit.

Accordingly, in an operation 509 at the client unit the response from the server unit is received and the selected implementation module specified by the data file sub-type is activated.

In the present example it is possible that the data file type is a MIME type and that the data file sub-type is a specific MIME type associated with a specific computing environment, such as a version or instance of a version of software code executed at the server unit.

Following thereto, in an operation 510 the data file is obtained and processed by the implementation module. For example, the server unit could transmit information including the data file and the data file sub-type to the client unit, triggering activation and processing of the received image data file at the client unit to effect a display of the image data file.

The embodiment illustrated with respect to Fig. 5 shows how a specific implementation module compatible with a specific software code at the server unit can be selected in an communication session between the client unit and server unit.

Additionally, the client unit may be engaged in communication sessions with further server units running software code having further release versions or instances of release versions. If service requests are received in association with these further communication sessions, further implementation modules compatible with these further versions or instances of versions are software code at the further server units may be selected. Likewise, a server unit may be engaged in a communication with a plurality of client units.

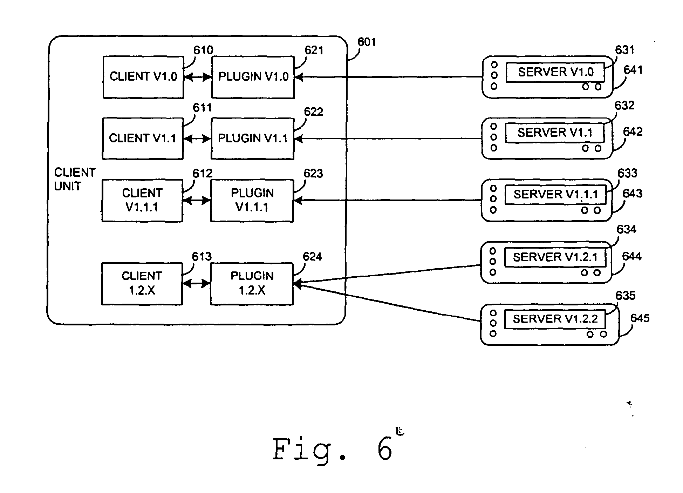

In the following a further embodiment of the invention will be described with respect to Fig. 6.

Fig. 6 shows elements of a system for processing a data file according to another embodiment of the invention, particularly showing a client unit adapted to cooperate with a plurality of different server units.

As it was outlined with respect to previous embodiments, the configuration data may be used to select one of a plurality of implementation modules for processing a data file based on a computing environment.

For example an implementation module may be selected based on a version of an operating program of a server unit. An operating program may be any software program configuring the server unit, providing basic functionality such as data file organization, data access, communications and similar. Further, an implementation module may be selected based on a version of an application program. An application program, as outlined before, may be any program for editing the data file, processing information included in the data file, transferring the data file, generating screen elements on a display and similar.

A version of an operating program or application program may be constituted by any modified form of a basic program, for example modified by a vendor or provider of a product. For example, a vendor or provider of processing services could offer a customized modification of an operating program or e.g. text processing program, the customized version-including a company logo, company colors or similar. Further, a version of an operating program or application program may be constituted by a release versions of a basic program, including instances or sub-versions of release versions. A text processing program may thus have a version 1.0, a version 1.1, or a sub-version 1.1.1 and similar.

Similarly, the implementation modules at the client unit may have different versions, wherein the different version of the implementation module are compatible with the different versions of the application programs or operating programs at the server unit.

Accordingly, the managing module may select an implementation module based on the computing environment, i.e., based on the version of the operating program or application program involved in providing a service for a user. For example, a user at a client unit is engaged in work sessions with a first and a second server unit, and is in the process of editing two text documents using a first and a second version of a text processing program implemented at the two server units. In this case, the managing module would select a first implementation module, i.e. version of the module, for cooperating with the first version of the text processing program at the first server unit and a second implementation module, i.e. version of the module, for cooperating with the second version of the text processing program at the second server unit.

Further, it was outlined before that an implementation module may be constituted by an implementation plug-in to enhance a functionality of an application program at the client unit, such as an application program for handling data files at a client unit e.g. a browser application or similar. Similarly, the managing module may be constituted by a managing-plug-in.

Thus, the configuration data accessed by a managing plug-in may specify a specific implementation plug-in based on characteristics of a server unit communicating with a client, or characteristics of an operating system being executed at the server unit or a service application program executed at the server unit. And, a specific implementation plug-in may be adapted to cooperate with a particular server operating program.

Further to the above, it is possible that a plurality of versions of a client operating program are installed at a single client unit, each of the client operating program versions being compatible with at least one implementation plug-in and at least one of the server operating programs.

Thus, each of the client operating programs can act independent from one another and be configured to cooperate with a specific server operating program or application program, and each of a plurality of a servers may be enabled to cooperate with the client unit independent from one another.

For example, a first server could be operated by a first vendor or provider, adapted to cooperate with a specific client operating program and a group of specific implementation plug-ins. Thus, if the vendor or provider offers a server operating program having a specific version or proprietary modification, the vendor or provider may furnish compatible client operating programs and implementation plug-ins for implementation at the client unit.

Fig. 6 shows a plurality of such constellations of client operating programs, implementation plug-ins and server operating programs.

A client unit 601, such as a client unit outlined with respect to previous embodiments, is shown to include a client operating program 610, having a version 1.0 as outlined before. The client operating program 610 cooperates with implementation plug-ins 621 having a corresponding version 1.0. Accordingly, the client operating program 610 and the implementation plug-ins 621 are adapted to cooperate with one another. During operation, the managing plug-in would now always select the implementation plug-ins 621 involving with service requests being generated in connection with the client operating program 610.

Fig. 6 only shows a single implementation plug-in of the version 1.0, however, it is understood that a plurality of implementation plug-ins for cooperation with the client operating program 610 may be provided.

Further, Fig. 6 shows a server 641 having a server operating program 631 implemented therein. The server unit 641 is adapted to cooperate with the client operating program 610 to the implementation plug-in 621. As outlined before, a service request from the client operating application 610 in connection with the server unit will therefore always result in an invocation of the implementation plug-ins 621, e.g. through a managing module and configuration data as outlined with respect to previous embodiments.

Further, Fig. 6 shows a client operating program 611 having a version 1.1, cooperating with an implementation plug-in 622, also with the version 1.1. The implementation plug-in 622 is adapted to cooperate with a server 642, having a server operating program 632 implemented therein, also of the version 1.1. Accordingly, the client operating program 611, the implementation plug-in 622 and the server operating program 632 may always cooperate with one another independent from the client operating program 610, the implementation plug-in 621 and the server operating program 631 of the version 1.0.

Accordingly, a first vendor or provider could operate the server 641, whereas a second vendor or provider could operate the server 642. As both servers are adapted for cooperation with separate client operating programs and implementation plug-ins, a independent operation may be ensured.

It was described before, that it is also possible that a sub-version or instance of a version of an operating program or application program may be adapted to cooperate with a separate set of implementation plug-ins. An example of such a case is also shown in Fig. 6, where a client operating program 612 with a sub-version 1.1.1 is adapted to cooperate with an implementation plug-in 623 also with the sub-version 1.1.1, which in turn is adapted to cooperated with a server 643 having implemented therein a server operating program 633, also of the sub-version 1.1.1. Accordingly, for any type of implementation, including versions of operating software or subversions or instances of operating software, may be accommodated in a single client unit, for independent operation.

Alternatively, however, it is also possible that a plurality of sub-versions or instances of a version of a server operating program are adapted to cooperate with a single client operating program and a single group of implementation plug-ins. As an example, Fig. 6 shows a client operating program 613 cooperating with implementation plug-ins 624. The client operating program 613 and the implementation plug-in 624 both have the same version 1.2.x, indicating that the client operating program 613 and the implementation plug-in 624 are designed to be downward compatible, i.e. they are compatible to any sub-verson or instance of the program version 1.2.

Accordingly, any server having a server operating program implemented therein having a sub-version or an instance of the version 1.2, can cooperate with the implementation plug-ins 624 of the version 1.2. As an example, Fig. 6 shows a server 644 having a server operating program 634 implemented therein, having the version 1.2.1. Further, Fig. 6 shows a second server 645 having implemented therein a server operating program 634 of the version 1.2.2. Both server operating programs 634 and 635 can cooperate with the downward compatible implementation plug-ins 624 and downward compatible client operating program 613.

Accordingly, as shown with the embodiment of Fig. 6, the invention allows different vendors or providers to offer independent solutions for implementation at a client unit. These independent solutions, through use of independent groups of implementations plug-ins can operate independent from one another.

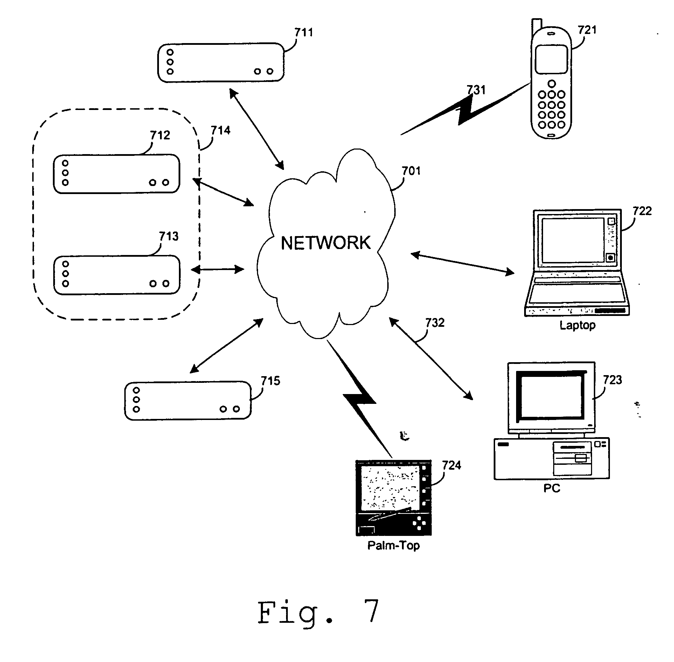

In the following a further embodiment of the invention will be described with respect to Fig. 7.

Fig. 7 shows elements of a system for processing a data file according to another embodiment of the invention, particularly illustrating a network arrangement including a variety of different client units and a plurality of server units.

A network 701 is provided for enabling a communication between the individual elements of the system shown in Fig. 1. The network 701 may be any kind of a network for connecting the processing elements, such as a circuit switched network or a packet switched network. Further, the network 701-may include a plurality of different networks, e.g. a local area network, a wide area network such as the internet and other networks such as telephone networks including telephone networks with dedicated communication links, connection less networks and wireless networks.

Further, Fig. 7 shows examples of client units, including a mobile phone 721, a laptop computer 722, a personal computer 723 and a palmtop 724.

Further Fig. 7 shows four server units 711, 712, 713 and 715. The server units may be operated by different providers or vendors. For example a first vendor or provider may operate the server 711 and another provider or vendor may operate the server 715. Further, another vendor or provider may operate the two servers 712 and 713, as illustrated by a box 714.

Each of the individual units shown in Fig. 7 is connected to the network 701 via any kind of communication link, including dedicated communication lines, connectionless links and wireless communication links.

For example the mobile phone 701 may preferably be connected to the network 701 via a wireless communication link 731, whereas the personal computer 723 will preferably be connected to the network 710 via a communication link which includes a fixed transmission line, e.g. to a household or office.

The mobile phone 721 may be any kind of mobile telephone or terminal being equipped with hardware and/or software enabling the mobile telephone 721 to function as a client unit as outlined with respect to any of the previous embodiments. For example, the mobile telephone 721 may be equipped with a control unit for receiving a service request to process a data file, e.g. input through the keys of the mobile phone or through voice commands. For example, a service request could concern a display of directory information at the mobile phone. Further, a managing module may be provided, registered to the data file type of the data file. The control unit could be adapted to activate the managing module upon receiving the service request to display directory information, and the managing module could be adapted to select one of a plurality of implementation modules for processing and displaying received directory information, based on configuration data available to the managing module, the configuration data specifying an implementation module for processing the data file. For facilitating the selection of an implementation module, the configuration data could include information on a computing environment, e.g. an application program version used by a directory information service provider, on a source of the request, e.g. one of a plurality of different users or a further application, or on a user preference, as outlined before.

Thus, an implementation module could be selected which is compatible with services provided by different telephone network operators or several providers. Further, the mobile phone 721 could be provided with implementation modules compatible with different versions of operating software at the server units shown in Fig. 7, as particularly outlined with respect to Fig. 6.

Further, the laptop computer 722 and the personal computer 723 may be any kind of personal, laptop or mobile computing device connected to the network 701, and equipped with appropriate hardware and/or software for enabling a functionality as described with respect to previous embodiments. Different implementation modules could be provided for cooperation with different server versions, application programs, etc.. This could include modules for visualization, text processing, scientific applications and similar.

Finally, the palmtop 724 may be any kind of palmtop computer may be equipped with appropriate hardware and/or software for enabling a functionality as outlined with respect to previous embodiments. For example, the palmtop could have implementation modules for cooperation with different versions of calendar applications, e.g. of different service providers, implementation modules for cooperation with different information services provided by different countries, for example to display different characters, such as Latin characters, Chinese and similar.

The server unit 711, 712, 713 and 715 may be any kind of server device providing a functionality as outlined with respect to previous embodiments. For example, the server 711 could have an operating system of a first version or sub-version. A version or sub-version may be any kind of modification of an operating program of a server unit, e.g. one of a release version of an operating program. Further, the version could be the modification of an operation program, for example of a particular vendor or provider offering specific services.

Each of the client units 721, 722, 723 and 724 preferably are equipped with versions of implementation modules compatible with the version of the operating program of the server 711. Similar applies to any application program being implemented at the server unit 711, e.g. each of the client units preferably is equipped with implementation modules compatible with a specific version of the application program at the server unit 711. The other server units 712, 713 and 715 may one or all be equipped with further versions of the operating program or application program, for cooperation for further implement-ation modules at the clients unit.

While Fig. 7 shows four examples of client units, it is understood that any other client unit could be provided.

The embodiment as described with respect to Fig. 7 particularly illustrates how a plurality of different server units and client units may cooperate with one another while ensuring full compatibility.

In the following, a further example of the elements of a processing unit for processing a data file will be outlined.
1). Processing unit including a code section including instructions to receive a service request and a code section including instructions to process the data file, the data file having one of a plurality of data file types;
   a code section including instructions to register a managing module to the data file type;
   a code section including instructions to activate the managing module upon receiving the service request; and
   a code section including instructions to select one of a plurality of implementation modules for processing the data file based on configuration data available to the managing module, the configuration data specifying an implementation module for processing the data file.
2). Processing unit of 1), including a code section including instructions to instruct the implementation module to process the data file.
3). Processing unit of 1), including a code section including instructions to effect a routing of the data file to the selected implementation module.
4). Processing unit of 1), including at a client unit a code section including instructions to issue a server request to a server unit, for instructing the server unit to effect use of the selected implementation module.
5). Processing unit of 1), including a code section including instructions to write a request file including information identifying the implementation module and a code section including instructions to generate an instruction to read the request file for effecting use of the implementation module.
6). Processing unit of 1), wherein the managing module is constituted by a managing plug-in, including a code section including instructions to register the managing plug-in to a data file type and including a code section to select the managing plug-in from a plurality of managing plug-ins based on the data file type.
7). Processing unit of 1), wherein the implementation module is constituted by an implementation plug-in, including a code section including instructions to register the implementation plug-in to a data file sub-type, and wherein the configuration data link the data file type and the data file sub-type.
8). Processing unit of 1), including a code section containing instructions to specify an implementation module based on at least one of
   - a computing environment;
   - a source of the service request; and
   - a user preference.
9). Processing unit of 1), including a code section containing instructions to generate the configuration data during runtime.
10). Processing unit of 1), wherein
   - a client unit includes a code section containing instructions of a plurality of client operating applications, each of the client operating applications cooperating with a server operating application located at a server unit; and
   - wherein different implementation modules are associated with different pairs of cooperating client and server operating applications.
11). Processing unit of 1), including code sections containing instructions for at least one of:
   - editing the data file;
   - processing information included in the data file;
   - transferring the data file; and
   - generating screen elements on a display.

## Claims

1. Method for processing a data file, the method comprising a client unit (410) performing the processing steps including :
receiving a service request (111; 430) to process the data file, the data file having one of a plurality of data file types;
activating a managing module (102; 413) in association with the data file type;
selecting one of a plurality of implementation modules (104, 105, 106; 415, 416, 417) for processing the data file, based on configuration data (103; 414) available to the managing module (102; 413), the configuration data (103; 414) specifying an implementation module for processing the data file, wherein the implementation module is registered to a data file sub-type and wherein the configuration data (103; 414) link the data file type and the data file sub-type;
issuing a server instruction to a service application (421) of a server unit (420) for effecting use of the selected implementation module;
receiving from the server unit a response at least including the data file sub-type associated with the selected implementation module; and
activating the implementation module specified by the data file sub-type.

2. Method of claim 1, wherein the managing module instructs the implementation module to process the data file.

3. Method of at least one of the claims 1 or 2, wherein the managing module effects a routing of the data file to the selected implementation module.

4. Method of at least one of the claims 1 - 3, wherein the managing module issues a server request to a server unit, instructing the server unit to effect use of the implementation module.

5. Method of at least one of the claims 1 - 4, wherein the server request is in a HTML format and includes an embedded element specifying the special MIME-type.

6. Method of at least one of the claims 1 - 5, wherein the managing module writes a request file including information identifying the implementation module and generates an instruction to read the request file for effecting use of the implementation module.

7. Method of at least one of the claims 1 - 6, wherein the managing module (102; 413) is constituted by a plug-in which is registered to a data file type and which is selected from a plurality of managing plug-ins based on the data file type.

8. Method of at least one of the claims 1 - 7, wherein the implementation module is constituted by an implementation plug-in.

9. Method of at least one of the claims 1 - 8, wherein the data file type is a MIME type and the data file sub-type is a special MIME type.

10. Method of at least one of the claims 1 - 9, wherein the configuration data specify an implementation module based on at least one of
- a computing environment;
- a source of the service request; and
- a user preference.

11. Method of at least one of the claims 1 - 10, wherein the configuration data are generated during runtime.

12. Method of at least one of the claims 1 - 11, wherein
the client unit includes a plurality of client operating applications, each of the client operating applications cooperating with a server operating application located at a server unit; and
different implementation modules are associated with different pairs of cooperating client and server operating applications.

13. Method of at least one of the claims 1 - 12, wherein the processing includes at least one of:
- editing the data file;
- processing information included in the data file;
- transferring the data file; and
- generating screen elements on a display.

14. A program having instructions adapted to carry out the method of at least one of the claims 1 - 13.

15. A computer readable medium, in which a program is embodied, where the program is to make a computer execute the method of at least one of the claims 1 - 13.

16. A computer program product comprising the computer readable medium according to claim 15.

17. A client unit for processing a data file, including:
a control unit for receiving a service request (111; 430) to process the data file, the data file having one of a plurality of data file types;
a managing module (102; 413) registered to the data file type;
wherein the control unit is adapted to activate the managing module (102; 413) upon receiving the service request; and
wherein the managing module (102; 413) is adapted to select one of a plurality of implementation modules (104, 105, 106; 415, 416, 417) for processing the data file, based on configuration data (103; 414) available to the managing module (102; 413), the configuration data (103; 414) specifying an implementation module for processing the data file;
wherein the control unit is adapted to register the implementation plug-in to a data file sub-type and wherein the configuration data (103; 414) link the data file type and the data file sub-type; and
wherein the managing module (102; 413) is adapted to issue a server instruction to a server unit (420) to effect use of the selected implementation module, to receive from the server unit a response at least including the data file sub-type associated with the selected implementation module, and to activate the implementation module specified by the data file sub-type.

18. Client unit of claim 17, wherein the managing module is arranged to instruct the implementation module to process the data file.

19. Client unit of at least one of the claims 17 or 18, wherein the managing module is arranged to effect a routing of the data file to the selected implementation module.

20. Client unit of at least one of the claims 16 - 19, wherein the managing module is located at a client unit and arranged to issue a server request to a server unit, for instructing the server unit to effect use of the implementation module.

21. Client unit of at least one of the claims 16 - 20, wherein the server request is in a HTML format and includes an embedded element specifying the special MIME-type.

22. Client unit of at least one of the claims 16 - 21, wherein the managing module is adapted to write a request file including information identifying the implementation module and to generate an instruction to read the request file for effecting use of the implementation module.

23. Client unit of at least one of the claims 16 - 22, wherein the managing module is constituted by a managing plug-in wherein the control unit is adapted to register the managing plug-in to a data file type and to select the managing plug-in from a plurality of managing modules based on the data file type.

24. Client unit of at least one of the claims 16 - 23, wherein the implementation module is constituted by an implementation plug-in.

25. Client unit of at least one of the claims 16 - 24, wherein the data file type is a MIME type and the data file sub-type is a special MIME type.

26. Client unit of at least one of the claims 16 - 25, wherein the configuration data specify an implementation module based on at least one of
- a computing environment;
- a source of the service request; and
- a user preference.

27. Client unit of at least one of the claims 16 - 26, wherein the control unit is adapted to generate the configuration data during runtime.

28. Client unit of at least one of the claims 16 - 27, wherein
the client unit includes a plurality of client operating applications, each of the client operating applications cooperating with a server operating application located at a server unit; and different implementation modules are associated with different pairs of cooperating client and server operating applications.

29. Client unit of at least one of the claims 16 - 28, including a processing unit for executing an implementation module for at least one of:
- editing the data file;
- processing information included in the data file;
- transferring the data file; and
- generating screen elements on a display.

## Patentansprüche

1. Verfahren zum Verarbeiten einer Datei, wobei das Verfahren eine Clienteinheit (410) aufweist, welche die Verarbeitungsschritte ausführt, welche umfassen:
Empfangen einer Dienstanforderung (111; 430) die Datei zu verarbeiten, wobei die Datei von einem aus einer Mehrzahl von Dateitypen ist,
Aktivieren eines Verwaltungsmoduls (102; 413) in Verbindung mit dem Dateityp,
Auswählen eines aus einer Mehrzahl von Implementierungsmodulen (104, 105, 106; 415, 416, 417) zum Verarbeiten der Datei, und zwar auf Basis von Konfigurationsdaten (103; 414), die für den Verwaltungsmodul (102; 413) verfügbar sind, wobei die Konfigurationsdaten (103; 414) ein Implementierungsmodul zum Verarbeiten in der Datei angeben, wobei das Implementierungsmodul für einen Dateiuntertyp registriert ist, und wobei die Konfigurationsdaten (103; 414) den Dateityp und den Dateiuntertyp miteinander verknüpfen,
Ausgeben einer Serveranweisung an eine Dienstanweisung (421) einer Servereinheit (420), um die Verwendung des ausgewählten Implementierungsmoduls zu bewirken,
Empfangen einer Antwort von der Servereinheit, wobei die Antwort zumindest den Dateiuntertyp enthält, der zu dem ausgewählten Implementierungsmodul gehört, und Aktivieren des Implementierungsmoduls, wie durch den Dateiuntertyp angegeben ist.

2. Verfahren nach Anspruch 1, wobei das Verwaltungsmodul das Implementierungsmodul anweist, die Datei zu verarbeiten.

3. Verfahren nach einem der Ansprüche 1 oder 2, wobei das Verwaltungsmodul ein Routing bzw. Leiten der Datei zu dem ausgewählten Implementierungsmodul bewirkt.

4. Verfahren nach zumindest einem der Ansprüche 1 bis 3, wobei das Verwaltungsmodul eine Serveranforderung an eine Servereinheit ausgibt, welche die Servereinheit anweist, die Verwendung des Implementierungsmoduls zu bewirken.

5. Verfahren nach zumindest einem der Ansprüche 1 bis 4, wobei die Serveranforderung im HTML-Format vorliegt und ein eingesetztes Element umfasst, welches den speziellen MIME-Typ angibt.

6. Verfahren nach zumindest einem der Ansprüche 1 bis 5, wobei das Verwaltungsmodul eine Anforderungsdatei schreibt, welche Information umfasst, die das Implementierungsmodul kennzeichnet, und eine Anweisung erzeugt, die Anforderungsdatei zu lesen, um die Verwendung des Implementierungsmoduls zu bewirken.

7. Verfahren nach zumindest einem der Ansprüche 1 bis 6, wobei das Verwaltungsmodul (102; 413) durch ein Plug-in gebildet wird, welches für einen Dateityp registriert ist und welches aus einer Mehrzahl von Verwaltungs-Plug-ins ausgewählt ist, die auf dem Dateityp beruhen.

8. Verfahren nach zumindest einem der Ansprüche 1 bis 7, wobei das Implementierungsmodul durch ein Implementierungs-plug-in gebildet wird.

9. Verfahren nach zumindest einem der Ansprüche 1 bis 8, wobei der Dateityp ein MI-ME-Typ ist und der Dateiuntertyp ein spezieller MIME-Typ ist.

10. Verfahren nach zumindest einem der Ansprüche 1 bis 9, wobei die Konfigurationsdaten ein Implementierungsmodul spezifizieren, und zwar auf der Basis von zumindest einem der folgenden:
- einer Rechnerumgebung
- einer Quelle der Dienstanforderung, und
- einer Benutzerpräferenz.

11. Verfahren nach zumindest einem der Ansprüche 1 bis 10, wobei die Konfigurationsdaten während der Laufzeit erzeugt werden.

12. Verfahren nach zumindest einem der Ansprüche 1 bis 11, wobei die Clienteinheit eine Mehrzahl von Clientbetriebsanwendungen umfasst, wobei jede der Clientbetriebsanwendungen mit einer Serverbetriebsanwendung zusammenarbeitet, die sich auf einer Servereinheit befindet; und
unterschiedliche Implementierungsmodule zu unterschiedlichen Paaren zusammenarbeitender Client- und Serverbetriebsanwendungen gehören.

13. Verfahren nach zumindest einem der Ansprüche 1 bis 12, wobei die Verarbeitung zumindest eines der folgenden aufweist:
- Indizieren der Datei,
- Verarbeiten von Information, die in der Datei enthalten ist,
- Übertragen der Datei; und
- Erzeugen von Bildschirmelementen auf einer Anzeige.

14. Programm, welches Anweisungen hat, die dafür ausgelegt sind, das Verfahren nach zumindest einem der Ansprüche 1 bis 13 auszuführen.

15. Computerlesbares Medium, in welchem ein Programm verkörpert ist, wobei das Programm darin besteht, einen Computer das Verfahren nach zumindest einem der Ansprüche 1 bis 13 ausführen zu lassen.

16. Computerprogrammprodukt, welches das computerlesbare Medium gemäß Anspruch 15 aufweist.

17. Clienteinheit zum Verarbeiten einer Datei, und umfassen:
eine Steuerheit für das Empfangen einer Dienstanforderung (111; 430) um die Datei zu verarbeiten, wobei die Datei einen aus einer Mehrzahl von Dateitypen aufweist,
ein Verwaltungsmodul (102; 413), welches für den Dateityp registriert ist,
wobei die Steuereinheit dafür ausgelegt ist, das Verwaltungsmodul (102; 413) nach Empfang der Dienstanforderung zu aktivieren, und
wobei das Verwaltungsmodul (102; 413) dafür ausgelegt ist, eines aus einer Mehrzahl von Implementierungsmodulen (104, 105, 106; 415, 416, 417) zum Verarbeiten der Datei auszuwählen, und zwar auf Basis von Konfigurierungsdaten (103; 414), die für das Verwaltungsmodul (102; 413) verfügbar sind, wobei die Konfigurierungsdaten (103; 414) ein Implementierungsmodul zum Verarbeiten der Datei angeben,
wobei die Steuereinheit dafür ausgelegt ist, das Implementierungs-plug-in für einen Dateiuntertyp zu registrieren, und wobei die Konfigurierungsdaten (103; 414) den Dateityp und den Dateiuntertyp miteinander verknüpfen und
wobei das Verwaltungsmodul (102; 413) dafür ausgelegt ist, eine Serveranweisung an eine Servereinheit (420) auszugeben, um die Verwendung des ausgewählten Implementierungsmoduls zu bewirken, um von der Servereinheit eine Antwort zu erhalten, die zumindest den Dateiuntertypen umfasst, der zu dem ausgewählten Implementierungsmodul gehört, und um das Implementierungsmodul, welches durch den Dateiuntertyp spezifiziert wird, zu aktivieren.

18. Clienteinheit nach Anspruch 17, wobei das Verwaltungsmodul dafür ausgelegt ist, das Implementierungsmodul anzuweisen, die Datei zu verarbeiten.

19. Clienteinheit nach zumindest einem der Ansprüche 17 oder 18, wobei das Verwaltungsmodul dafür ausgelegt ist, ein Weiterleiten bzw. Routing der Datei an das ausgewählte Implementierungsmodul zu bewirken.

20. Clienteinheit nach zumindest einem der Ansprüche 16 bis 19, wobei das Verwaltungsmodul bei einer Clienteinheit angeordnet und so ausgelegt ist, dass es eine Dienstanforderung an eine Servereinheit ausgibt, um die Servereinheit anzuweisen, die Verwendung des Implementierungsmodul zu bewirken.

21. Clienteinheit nach zumindest einem der Ansprüche 16 bis 20, wobei die Serveranforderung in einem HTML-Format vorliegt und ein eingebettetes Element enthält, welches den speziellen MIME-Typen spezifiziert.

22. Clienteinheit nach zumindest einem der Ansprüche 16 bis 21, wobei das Verwaltungsmodul dafür ausgelegt ist, eine Anforderungsdatei zu schreiben, welche eine Information umfasst, die das Implementierungsmodul kennzeichnet, und weiterhin dafür ausgelegt ist, eine Anweisung zum Lesen der Anforderungsdatei zu erzeugen, um die Verwendung des Implementierungsmoduls zu bewirken.

23. Clienteinheit nach zumindest einem der Ansprüche 16 bis 22, wobei das Verwaltungsmodul durch ein Verwaltungs-plug-in gebildet wird, wobei die Steuerungseinheit dafür ausgelegt ist, das Verwaltungs-plug-in für einen Dateityp zu registrieren und das Verwaltungs-plug-in auf Basis des Dateitypen aus einer Mehrzahl von Verwaltungsmodulen auszuwählen.

24. Clienteinheit nach zumindest einem der Ansprüche 16 bis 23, wobei das Implementierungsmodul aus einem Implementierungs-plug-in besteht.

25. Clienteinheit nach zumindest einem der Ansprüche 16 bis 24, wobei der Dateityp ein MIME-Typ ist und der Dateiuntertyp ein spezieller MIME-Typ ist.

26. Clienteinheit nach zumindest einem der Ansprüche 16 bis 25, wobei die Konfigurierungsdaten ein Implementierungsmodul zumindest auf Basis eines der folgenden spezifizieren:
- einer Rechnerumgebung,
- einer Quelle einer Dienstanforderung, und
- einer Benutzerpräferenz.

27. Clienteinheit nach zumindest einem der Ansprüche 16 bis 26, wobei die Steuereinheit dafür ausgelegt ist, die Konfigurierungsdaten während der Laufzeit zu erzeugen.

28. Clienteinheit nach zumindest einem der Ansprüche 16 bis 27, wobei
die Clienteinheit eine Mehrzahl von Clientbetriebsanwendungen enthält, wobei jede der Clientbetriebsanwendungen mit einer Serverbetriebsanwendung zusammenarbeitet, die sich auf bzw. bei einer Servereinheit befindet, und wobei verschiedene Implementierungsmodule zu unterschiedlichen Paaren zusammenarbeitender Client- und Serverbetriebsanwendungen gehören.

29. Clienteinheit nach zumindest einem der Ansprüche 16 bis 28, umfassend eine Verarbeitungseinheit zum Ausführen eines Implementierungsmoduls zumindest für eines der folgenden:
- Editieren der Datei;
- Verarbeiten von Information, die in der Datei enthalten ist,
- Übertragen der Datei, und
- Erzeugen von Bildschirmelementen auf einer Anzeige.

## Revendications

1. Procédé pour traiter un fichier de données, le procédé comprenant une unité client (410) effectuant les étapes de traitement incluant :
la réception d'une demande de service (111 ; 430) pour traiter le fichier de données, le fichier de données ayant un d'une pluralité de types de fichier de données ;
l'activation d'un module de gestion (102 ; 413) en association avec le type de fichier de données ;
la sélection d'un d'une pluralité de modules de mise en oeuvre (104, 105, 106 ; 415, 416, 417) pour traiter le fichier de données, sur la base de données de configuration (103 ; 414) disponibles pour le module de gestion (102 ; 413), les données de configuration (103 ; 414) spécifiant un module de mise en oeuvre pour traiter le fichier de données, où le module de mise en oeuvre est enregistré pour un sous-type de fichier de données et où les données de configuration (103 ; 414) lient le type de fichier de données et le sous-type de fichier de données ;
l'émission d'une instruction de serveur vers une application de service (421) d'une unité serveur (420) pour effectuer l'utilisation du module de mise en oeuvre sélectionné ;
la réception en provenance de l'unité serveur d'une réponse incluant au moins le sous-type de fichier de données associé au module de mise en oeuvre sélectionné ; et
l'activation du module de mise en oeuvre spécifié par le sous-type de fichier de données.

2. Procédé selon la revendication 1, dans lequel le module de gestion donne pour instruction au module de mise en oeuvre de traiter le fichier de données.

3. Procédé selon au moins une des revendications 1 ou 2, dans lequel le module de gestion effectue un routage du fichier de données vers le module de mise en oeuvre sélectionné.

4. Procédé selon au moins une des revendications 1 à 3, dans lequel le module de gestion émet une demande de serveur vers une unité serveur, donnant pour instruction à l'unité serveur d'effectuer l'utilisation du module de mise en oeuvre.

5. Procédé selon au moins une des revendications 1 à 4, dans lequel la demande de serveur est dans un format HTML et inclut un élément intégré spécifiant le type MIME spécial.

6. Procédé selon au moins une des revendications 1 à 5, dans lequel le module de gestion écrit un fichier de demande incluant des informations identifiant le module de mise en oeuvre et génère une instruction pour lire le fichier de demande pour effectuer l'utilisation du module de mise en oeuvre.

7. Procédé selon au moins une des revendications 1 à 6, dans lequel le module de gestion (102 ; 413) est constitué par un plugiciel qui est enregistré pour un type de fichier de données et qui est sélectionné parmi une pluralité de plugiciels de gestion sur la base du type de fichier de données.

8. Procédé selon au moins une des revendications 1 à 7, dans lequel le module de mise en oeuvre est constitué par un plugiciel de mise en oeuvre.

9. Procédé selon au moins une des revendications 1 à 8, dans lequel le type de fichier de données est un type MIME et le sous-type de fichier de données est un type MIME spécial.

10. Procédé selon au moins une des revendications 1 à 9, dans lequel les données de configuration spécifient un module de mise en oeuvre sur la base d'au moins un parmi
- un environnement informatique ;
- une source de la demande de service ; et
- une préférence utilisateur.

11. Procédé selon au moins une des revendications 1 à 10, dans lequel les données de configuration sont générées pendant un temps d'exécution.

12. Procédé selon au moins une des revendications 1 à 11, dans lequel
l'unité client inclut une pluralité d'applications d'exploitation client, chacune des applications d'exploitation client coopérant avec une application d'exploitation serveur localisée au niveau d'une unité serveur ; et
des modules de mise en oeuvre différents sont associés à des paires différentes d'applications d'exploitation client et serveur coopérant.

13. Procédé selon au moins une des revendications 1 à 12, dans lequel le traitement inclut au moins un parmi :
- l'édition du fichier de données;
- le traitement d'informations incluses dans le fichier de données ;
- le transfert du fichier de données ; et
- la génération d'éléments d'écran sur un afficheur.

14. Programme ayant des instructions adaptées pour effectuer le procédé selon au moins une des revendications 1 à 13.

15. Support lisible par ordinateur, dans lequel un programme est incorporé, où le programme est destiné à amener un ordinateur à exécuter le procédé selon au moins une des revendications 1 à 13.

16. Produit de programme informatique comprenant le support lisible par ordinateur selon la revendication 15.

17. Unité client pour traiter un fichier de données, incluant :
une unité de commande pour recevoir une demande de service (111 ; 430) pour traiter le fichier de données, le fichier de données ayant un d'une pluralité de types de fichier de données ;
un module de gestion (102 ; 413) enregistré pour le type de fichier de données ;
dans laquelle l'unité de commande est adaptée pour activer le module de gestion (102 ; 413) lors de la réception de la demande de service ; et
dans laquelle le module de gestion (102 ; 413) est adapté pour sélectionner un d'une pluralité de modules de mise en oeuvre (104, 105, 106 ; 415, 416, 417) pour traiter le fichier de données, sur la base de données de configuration (103 ; 414) disponibles pour le module de gestion (102 ; 413), les données de configuration (103 ; 414) spécifiant un module de mise en oeuvre pour traiter le fichier de données ;
dans laquelle l'unité de commande est adaptée pour enregistrer le plugiciel de mise en oeuvre pour un sous-type de fichier de données et dans laquelle les données de configuration (103 ; 414) lient le type de fichier de données et le sous-type de fichier de données ; et
dans laquelle le module de gestion (102 ; 413) est adapté pour émettre une instruction de serveur vers une unité serveur (420) pour effectuer l'utilisation du module de mise en oeuvre sélectionné, pour recevoir en provenance de l'unité serveur une réponse incluant au moins le sous-type de fichier de données associé au module de mise en oeuvre sélectionné, et pour activer le module de mise en oeuvre spécifié par le sous-type de fichier de données.

18. Unité client selon la revendication 17, dans laquelle le module de gestion est agencé pour donner pour instruction au module de mise en oeuvre de traiter le fichier de données.

19. Unité client selon au moins une des revendications 17 ou 18, dans laquelle le module de gestion est agencé pour effectuer un routage du fichier de données vers le module de mise en oeuvre sélectionné.

20. Unité client selon au moins une des revendications 16 à 19, dans laquelle le module de gestion est localisé au niveau d'une unité client et agencé pour émettre une demande de serveur vers une unité serveur, pour donner pour instruction à l'unité serveur d'effectuer l'utilisation du module de mise en oeuvre.

21. Unité client selon au moins une des revendications 16 à 20, dans laquelle la demande de serveur est dans un format HTML et inclut un élément intégré spécifiant le type MIME spécial.

22. Unité client selon au moins une des revendications 16 à 21, dans laquelle le module de gestion est adapté pour écrire un fichier de demande incluant des informations identifiant le module de mise en oeuvre et pour générer une instruction pour lire le fichier de demande pour effectuer l'utilisation du module de mise en oeuvre.

23. Unité client selon au moins une des revendications 16 à 22, dans laquelle le module de gestion est constitué par un plugiciel de gestion dans lequel l'unité de commande est adaptée pour enregistrer le plugiciel de gestion pour un type de fichier de données et pour sélectionner le plugiciel de gestion parmi une pluralité de modules de gestion sur la base du type de fichier de données.

24. Unité client selon au moins une des revendications 16 à 23, dans laquelle le module de mise en oeuvre est constitué par un plugiciel de mise en oeuvre.

25. Unité client selon au moins une des revendications 16 à 24, dans laquelle le type de fichier de données est un type MIME et le sous-type de fichier de données est un type MIME spécial.

26. Unité client selon au moins une des revendications 16 à 25, dans laquelle les données de configuration spécifient un module de mise en oeuvre sur la base d'au moins un parmi
- un environnement informatique ;
- une source de la demande de service ; et
- une préférence utilisateur.

27. Unité client selon au moins une des revendications 16 à 26, dans laquelle l'unité de commande est adaptée pour générer les données de configuration pendant un temps d'exécution.

28. Unité client selon au moins une des revendications 16 à 27, dans laquelle
l'unité client inclut une pluralité d'applications d'exploitation client, chacune des applications d'exploitation client coopérant avec une application d'exploitation serveur localisée au niveau d'une unité serveur ; et
des modules de mise en oeuvre différents sont associés à des paires différentes d'applications d'exploitation client et serveur coopérant.

29. Unité client selon au moins une des revendications 16 à 28, incluant une unité de traitement pour exécuter un module de mise en oeuvre pour au moins un parmi :
- l'édition du fichier de données ;
- le traitement d'informations incluses dans le fichier de données ;
- le transfert du fichier de données ; et
- la génération d'éléments d'écran sur un afficheur.
